# DEMANDE DE BREVET EUROPEEN

(11) **EP 1 916 138 A1**
(43) Date de publication de la demande: **30.04.2008**
(21) Numéro de dépôt: 07118253.9
(22) Date de dépôt: 10.10.2007
(51) Int. Cl.: B60J 7/16

(54) **Pavillon de toit d'un véhicule automobile comprenant un panneau mobile entre une position abaissée et une position relevée, et véhicule automobile pourvu d'un tel pavillon de toit**

(30) Priorité: 27.10.2006 FR 0654607
(71) Demandeur: PEUGEOT CITROËN AUTOMOBILES SA, 78140 Vélizy Villacoublay (FR)
(72) Inventeur: Bertrand Belanger, M.Pascal, 78280, Guyancourt (FR)
(74) Mandataire: Allain, Laurent

(57) **Abrégé**

L'invention concerne un pavillon de toit d'un véhicule automobile, comprenant un panneau avant fixe (6) et un panneau arrière mobile (7) entre une position abaissée, en prolongement du panneau fixe (6) et d'une traverse arrière de pavillon (9), et une position relevée de rehausse.

Particulièrement selon l'invention, le panneau mobile (7) a sa partie avant (7AV) adjacente au panneau fixe (6) montée pivotante relativement à la caisse (10) du véhicule et sa partie arrière (7AR) munie d'un pêne de verrouillage (12) destiné à s'engager sélectivement dans l'un des logements inférieur et supérieur (13, 14) de la traverse arrière de pavillon (9) de manière à verrouiller le panneau mobile (7) en position abaissée ou en position relevée de rehausse.

L'invention trouve son application dans le domaine de l'automobile.

## Description

La présente invention concerne un pavillon de toit d'un véhicule automobile comprenant un panneau mobile entre une position abaissée et une position relevée, et un véhicule automobile pourvu d'un tel pavillon de toit.

Dans certains véhicules, tels que des coupés, des monospaces ou des breaks, la garde au toit de la rangée de sièges arrière adjacente au coffre du véhicule est souvent limitée en raison des contraintes de style. Ce cas se produit notamment lorsque la ligne du véhicule présente une chute prononcée du panneau.

Une garde au toit ainsi limitée peut s'avérer gênante pour des passagers, par exemple des adultes, assis sur les sièges de la rangée arrière.

Pour remédier à cet inconvénient, il est connu du document JP 1996-258 565 un pavillon de toit d'un véhicule automobile comprenant un panneau avant fixe et un panneau arrière mobile entre une position abaissée, en prolongement du panneau fixe et d'une traverse arrière de pavillon, et une position relevée de rehausse relativement à la traverse arrière de pavillon. Ainsi, lorsque qu'une hauteur de pavillon plus importante est nécessaire, l'utilisateur peut relever le panneau mobile. Pour ce faire, le pavillon de toit décrit dans ce document comprend, au niveau de la partie postérieure du panneau mobile, un système de biellettes articulées. Toutefois, ce système d'articulation est dépourvu de moyens de blocage du panneau suffisants pour résister aux écoulements aérodynamiques. De plus, un tel toit s'avère coûteux.

Le but de la présente invention est de remédier aux inconvénients précités et de proposer un pavillon de toit économiquement réalisable et qui permet, tout en conservant le style désiré, d'augmenter la hauteur de pavillon lorsque cela est nécessaire, et ce, avec une transformation du pavillon de toit vers une configuration stable qui résiste aux écoulements aérodynamiques.

A cet effet, l'invention concerne un pavillon de toit d'un véhicule automobile, comprenant un panneau avant fixe et un panneau arrière mobile entre une position abaissée, en prolongement du panneau fixe et d'une traverse arrière de pavillon, et une position relevée de rehausse relativement à la traverse arrière de pavillon, caractérisé en ce que le panneau mobile a sa partie avant adjacente au panneau fixe montée pivotante relativement à la caisse du véhicule autour d'un axe transversal au véhicule et sa partie arrière munie d'un pêne de verrouillage destiné à s'engager sélectivement dans l'un des logements inférieur et supérieur formant gâche de la traverse arrière du pavillon de manière à verrouiller le panneau mobile en position abaissée ou en position relevée de rehausse.

Selon une autre caractéristique de l'invention, le panneau mobile est fixé sur un cadre de support s'inscrivant en épaisseur dans le pavillon et dont la partie antérieure est reliée à la caisse du véhicule par une charnière transversale d'articulation et dont la partie arrière comprend le pêne de verrouillage s'étendant sensiblement en direction longitudinale du véhicule.

Selon une autre caractéristique de l'invention, le cadre de support du panneau mobile comporte deux demi-cadres, respectivement supérieur de support du panneau mobile et inférieur dont la partie antérieure est reliée à la caisse du véhicule par la charnière transversale d'articulation et dont la partie arrière comprend le pêne de verrouillage s'étendant sensiblement en direction longitudinale du véhicule.

Selon une autre caractéristique de l'invention, le cadre de support comprend deux collerettes périphériques externes supérieure et inférieure,respectivement destinées à venir sélectivement en appui sur deux joints d'étanchéité solidaires du pavillon respectivement en position abaissée et relevée du panneau mobile.

Selon une autre caractéristique de l'invention, les parties antérieures et arrière, des joints d'étanchéités sont solidaires respectivement d'une traverse de support du panneau fixe et de la traverse arrière de pavillon.

Selon une autre caractéristique de l'invention, les deux joints d'étanchéité forment un joint unique constitué d'un lobe inférieur et d'un lobe supérieur.

Selon une autre caractéristique de l'invention, le pavillon de toit comprend des canaux d'évacuation supérieur et inférieur, traversant la traverse arrière de pavillon et étant destinés à évacuer des eaux de pluie accumulées entre la traverse arrière de pavillon et le cadre de support du panneau mobile.

Selon une autre caractéristique de l'invention, la charnière transversale d'articulation comprend un bras coudé pivotant autour de l'axe d'articulation de cette charnière et s'étendant vers l'arrière du véhicule en ayant son extrémité externe solidaire du bord antérieur de la collerette inférieur du cadre de manière à également rehausser la partie avant du cadre de support.

Selon une autre caractéristique de l'invention, le pavillon de toit comprend au moins un compensateur monté entre la caisse du véhicule et le cadre de support du pavillon mobile de façon que le panneau mobile soit poussé automatiquement vers l'extérieur du véhicule lorsque le pêne de verrouillage est dégagé du logement inférieur de la traverse arrière de pavillon.

Selon une autre caractéristique de l'invention, le panneau mobile est constitué d'une plaque de verre fixée par collage.

Selon une autre caractéristique de l'invention, le cadre de support du panneau mobile comprend un rideau d'occultation monté sous le panneau mobile.

Selon une autre caractéristique de l'invention, le pêne de verrouillage est manoeuvré manuellement ou peut être commandé à distance.

L'invention a également pour objet un véhicule automobile pourvu d'un pavillon de toit tel que défini ci-dessus.

L'invention sera maintenant décrite en détail, en référence aux figures annexées.
- la figure 1 est une vue en coupe longitudinale d'un véhicule automobile muni d'un pavillon de toit à panneau mobile selon l'invention, et occupant une position abaissée;
- la figure 2 est une vue en coupe semblable à celle de la figure 1 où le panneau mobile est en position relevée de rehausse;
- la figure 3 est une vue en coupe longitudinale agrandie du pavillon de toit du véhicule représenté à la figure 1, le panneau mobile étant en position abaissée;
- la figure 4 est une vue en coupe semblable à celle de la figure 3, le panneau mobile étant dans une position intermédiaire;
- la figure 5 est une vue en coupe semblable à celle de la figure 3, le panneau mobile étant en position relevée de rehausse;
- la figure 6 est une vue en perspective d'un cadre de support du panneau mobile du pavillon de toit des figures 1 à 5;
- la figure 7 est une vue agrandie en perspective arrière d'une gouttière de la traverse arrière de pavillon du véhicule de la figure 1;
- la figure 8 est une vue en coupe semblable à celle de la figure 3, le panneau mobile étant pourvu d'un appendice aérodynamique.

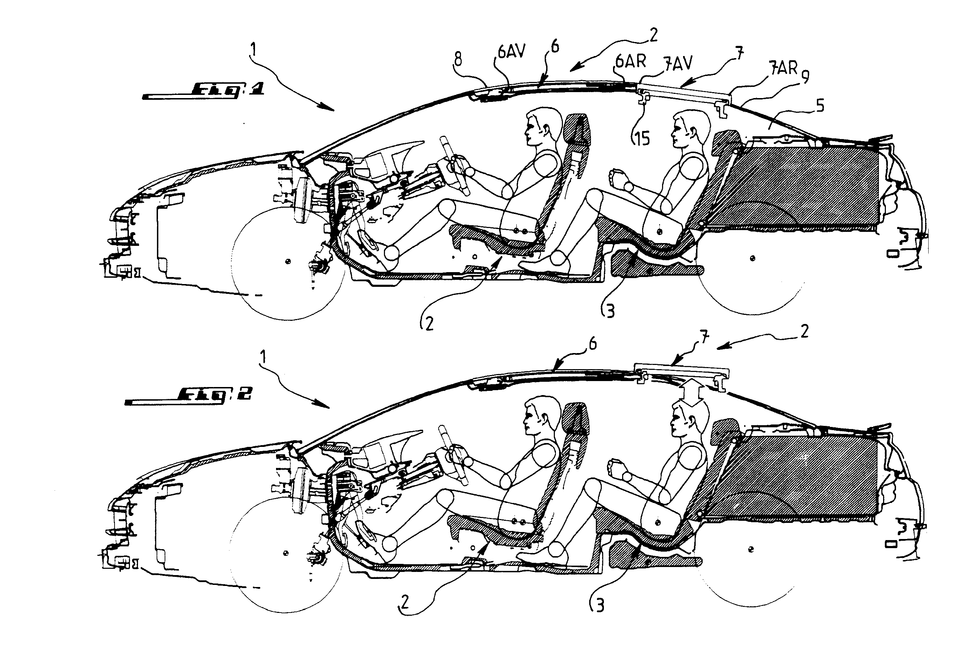

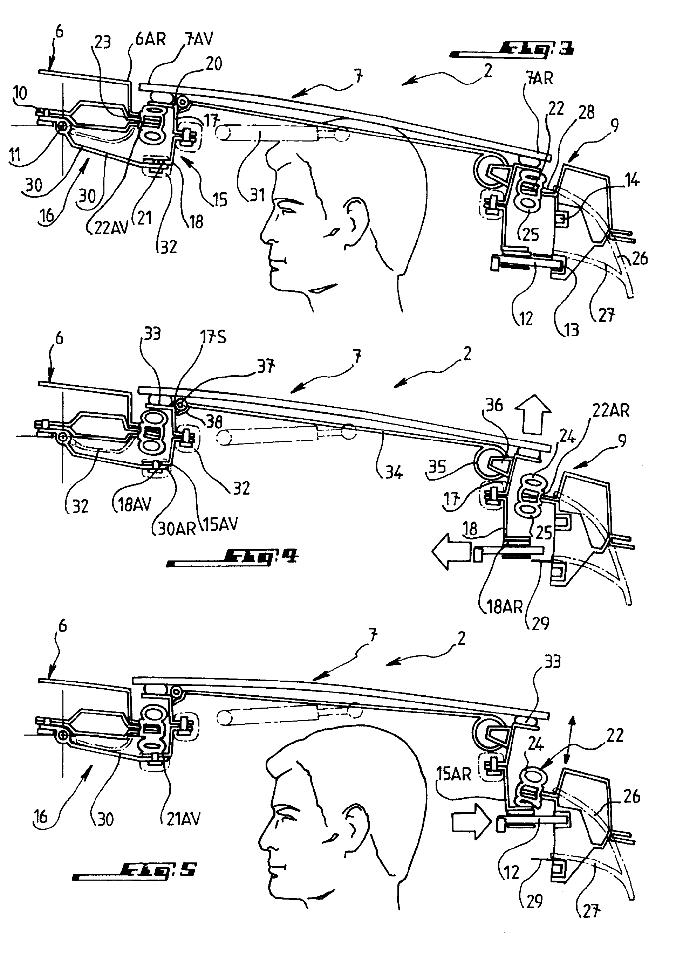

Les figures 1 et 2 représentent un véhicule automobile 1 muni d'une rangée de sièges avant 2 et d'une rangée de sièges arrière 3. L'habitacle de ce véhicule 1 est recouvert par un pavillon de toit 4 dont la ligne présente une chute prononcée en direction de la lunette arrière 5 du véhicule 1.

De façon connue, le pavillon de toit 4 comprend un panneau avant fixe 6 adajacent au pare-brise du véhicule et un panneau arrière mobile 7.

Le bord avant 6AV du panneau avant fixe 6 est fixé à la traverse avant de pavillon 8. Son bord arrière 6AR coopère avec la partie avant 7AV du panneau mobile 7.

Le panneau mobile 7 peut être déplacé entre une position abaissée, représentée à la figure 1, et une position relevée de rehausse, représentée à la figure 2.

Comme visible sur la figure 1, en position abaissée, le panneau mobile 7 est dans le prolongement du panneau avant fixe 6 et de la traverse arrière de pavillon 9. Les bords latéraux du panneau mobile 7 sont alors adjacents aux longerons latéraux de la caisse 10 du véhicule 1. Ces longerons ne sont pas visibles sur les figures.

Comme visible sur la figure 2, en position relevée de rehausse, le panneau mobile 7 est relevé selon une direction approximativement verticale.

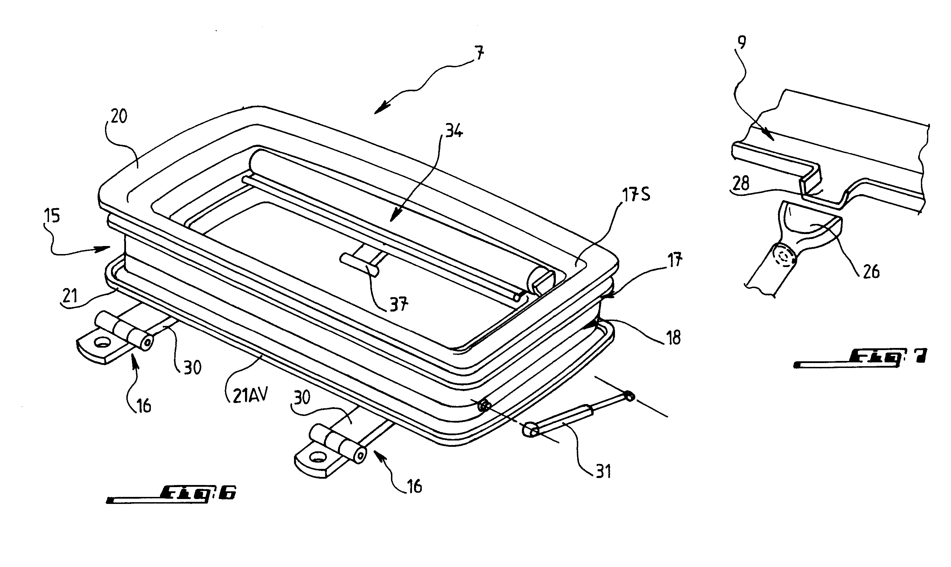

Les figures 3, 4 et 5 représentent le pavillon de toit 4 muni du panneau mobile 7 placé respectivement en position abaissée, en position intermédiaire et en position relevée de rehausse.

Selon l'invention, le panneau mobile 7 a sa partie avant 7AV adjacente au panneau fixe 6 montée pivotante relativement à la caisse 10 du véhicule 1 autour d'un axe de rotation 11 transversal au véhicule 1. Ce montage permet de déplacer le panneau mobile 7 de sa position abaissée à sa position relevée de rehausse.

Par ailleurs, de manière à pouvoir verrouiller le panneau mobile 7 en position abaissée et en position relevée de rehausse, la partie arrière 7AR du panneau mobile 7 est munie d'un pêne de verrouillage 12 destiné à s'engager sélectivement dans l'un des logements inférieur et supérieur 13, 14 de la traverse arrière de pavillon 9 lorsque le panneau mobile 7 est respectivement en positions abaissée et relevée de rehausse.

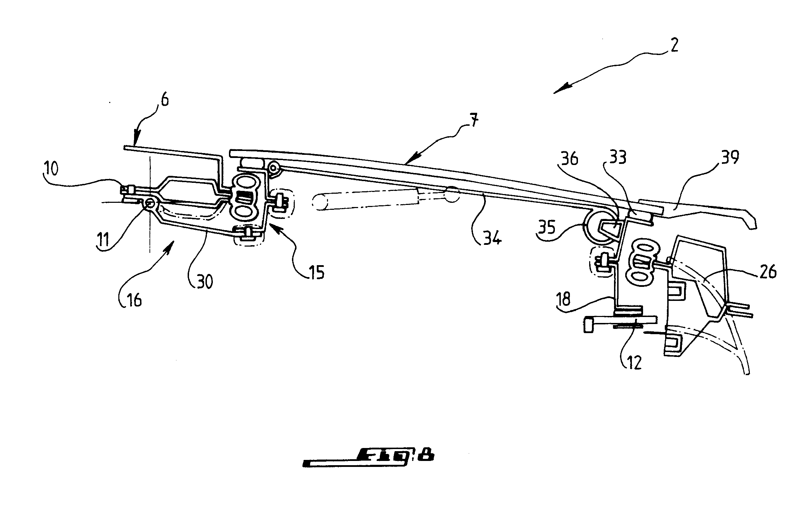

De préférence, le panneau mobile 7 est fixé sur un cadre de support 15 s'inscrivant en épaisseur dans le pavillon de toit 4. La partie avant 15AV de ce cadre 15 est reliée à la caisse 10 du véhicule 1 par une charnière transversale d'articulation constituée de deux éléments charnière 16 espacés transversalement au véhicule, représentées en figure 6. La partie arrière 15AR du cadre 15 comprend le pêne de verrouillage 12 s'étendant sensiblement en direction longitudinale du véhicule 1.

Le cadre de support 15 du panneau mobile 7 comporte deux demi-cadres supérieur et inférieur 17, 18. Le demi-cadre supérieur 17 supporte le panneau mobile 7. Le demi-cadre inférieur 18 a sa partie avant 18AV reliée à la caisse 10 du véhicule 1 par la charnière transversale d'articulation 16 et sa partie arrière 18AR qui comprend le pêne de verrouillage 12.

Le cadre de support 15 comprend une collerette périphérique externe supérieure 20 et une collerette périphérique externe inférieure 21. Ces collerettes supérieure et inférieure 20, 21 sont destinées à venir sélectivement en appui sur un joint d'étanchéité 22 solidaire du pavillon 4 en position abaissée ou relevée du panneau mobile 7.

La partie transversale avant 22AV du joint d'étanchéité 22 est solidaire d'une traverse de support 23 de la partie arrière du panneau fixe 6, et la partie transversale arrière 22AR de ce joint est solidaire de la traverse arrière de pavillon 9. Ainsi, ces deux parties 22AV et 22AR du joint 22 sont disposées entre les deux parties transversales avant et arrière des deux collerettes 20,21.

Avantageusement, ce joint d'étanchéité 22 est constitué d'un lobe supérieur 24 et d'un lobe inférieur 25.

Ainsi, lorsque le panneau mobile 7 est en position abaissée, comme représenté à la figure 3, la collerette supérieure 20 du cadre de support 15 écrase le lobe supérieur 24 du joint d'étanchéité 22 de façon à assurer l'étanchéité du pavillon de toit 4.

Lorsque le panneau mobile 7 est en position relevée de rehausse, comme représenté à la figure 5, la collerette inférieure 21 du cadre de support 15 écrase le lobe inférieur 25 du joint d'étanchéité 22 de façon à assurer l'étanchéité du pavillon de toit 4.

Alternativement, l'étanchéité peut être réalisée par deux joints d'étanchéité superposés l'un sur l'autre.

De façon à évacuer des eaux de pluie pouvant s'accumuler entre la traverse arrière de pavillon 9 et le cadre de support 15 du panneau mobile 7, le pavillon de toit 4 comprend des canaux ou conduits d'évacuation supérieur et inférieur 26, 27 traversant la traverse arrière de pavillon 9 et débouchant sous le véhicule 1.

Ainsi, lorsque le panneau mobile 7 est en position abaissée ou en position relevée de rehausse, la base du joint d'étanchéité 22 monté sur la traverse arrière de pavillon 9 forme naturellement une gouttière d'évacuation 28, visible sur la figure 7, qui permet de récupérer des eaux de pluie s'écoulant du panneau mobile 7. L'eau récupérée est ensuite canalisée et évacuée sous le véhicule 1 par l'intermédiaire du canal supérieur d'évacuation 26.

Lorsque le panneau mobile 7 est en position intermédiaire, comme représenté à la figure 4, alors une partie du liquide est recueillie par la gouttière d'évacuation 28 et évacuée par le canal supérieur d'évacuation 26.

Le restant du liquide est recueilli par un collecteur de liquide 29 qui forme un rebord horizontal lié à la traverse arrière de pavillon 9 entre le logement supérieur 14 et le logement inférieur 13 à proximité du logement inférieur 13. Le collecteur de liquide 29 débouche sur l'entrée du canal d'évacuation inférieur 27 des liquides.

Les figures 3 à 5 montrent également que chaque charnière transversale d'articulation 16 comporte un bras coudé 30 pivotant autour de l'axe de rotation 11 de cette charnière 16 et s'étendant en arrière du véhicule 1 en ayant son extrémité arrière 30AR solidaire du bord avant 21AV de la collerette inférieure 21 du bord avant 18AV du demi-cadre inférieur 18 du panneau mobile 7. Cette disposition permet de rehausser également la partie avant 15AV du cadre 15 et du panneau mobile 7.

Le panneau mobile 7 est pourvu de deux compensateurs 31 montés sur le demi-cadre inférieur 18 et qui se logent dans la gouttière latérale du pavillon de toit 4. Un seul des compensateurs 31 est visible sur les figures 3 à 5. Ces compensateurs 31 permettent au panneau mobile 7 d'être poussé automatiquement à sa position supérieure de rehausse lorsque le pêne de verrouillage 12 est dégagé du logement inférieur 13 de la traverse arrière de pavillon 9.

Il est à noter que le demi-cadre supérieur 17 et le demi-cadre inférieur 18 sont destinés à être assemblés l'un sur l'autre respectivement par l'extérieur et par l'intérieur du véhicule 1 et de part et d'autre du joint 22 préalablement fixé au pavillon. Ainsi, le joint d'étanchéité 22 peut être contourné lors du montage du cadre de support 15.

De plus, les deux demi-cadres 17, 18 sont assemblés l'un à l'autre de façon réversible afin de faciliter le remplacement après vente.

Afin de protéger les bords du cadre de support 15, des garnissages périphériques 32 sont placés au niveau des fixations du demi-cadre supérieur 17 et du demi-cadre inférieur 18, au niveau de la fixation de la charnière 16 sur le cadre de support 15 et en partie inférieure de la traverse avant de pavillon 8.

Dans le mode de configuration présenté sur les figures, le panneau mobile 7 est constitué d'une plaque de verre montée sur le cadre de support 15 par l'intermédiaire de joints de colle 33.

Un rideau souple enroulable 34, permettant d'occulter la lumière passant au travers de la plaque de verre 7, est monté sur le cadre de support 15. Ce rideau 34 est monté au niveau du bord supérieur 17S du demi-cadre supérieur 17 et comprend un enrouleur 35 monté sur un support 36 fixé dans le demi-cadre supérieur 17 à l'arrière de celui-ci.

Le rideau 34 comprend également une poignée de manoeuvre 37, visible sur la figure 6, qui coopère avec un crochet 38 solidaire du demi-cadre supérieur 17 lorsque le rideau 34 est en position fermée.

Comme visible en figure 8, des appendices aérodynamiques 39 peuvent être ajoutés au niveau du bord arrière 7AR du panneau mobile 7.

Pour faire passer le panneau mobile 7 de sa position abaissée, représentée aux figures 1 et 3, à sa position relevée de rehausse représentée aux figures 2 et 5, l'utilisateur tire sur le pêne de verrouillage 12 afin de le désengager du logement inférieur 13 de la traverse arrière de pavillon 9.

Ainsi, tel que représenté à la figure 4, le panneau mobile 7 est libéré et peut pivoter relativement à l'axe de rotation 11 de la charnière 16 sur la caisse 10.

Grâce à l'action des compensateurs 31, le panneau mobile 7 est poussé automatiquement vers l'extérieur jusqu'à ce que la collerette inférieure 21 du cadre de support 15 entre en contact et écrase au maximum le lobe inférieur 25 du joint d'étanchéité 22.

Dans cette position, le pêne de verrouillage 12 arrive à hauteur du logement supérieur 14 de la traverse arrière de pavillon 9.

L'utilisateur n'a plus qu'à pousser le pêne de verrouillage 12 dans ce logement supérieur 14 pour que la position relevée de rehausse soit verrouillée, comme en figure 5.

Pour faire passer le panneau mobile 7 de sa position relevée de rehausse à sa position abaissée, l'utilisateur doit effectuer des opérations similaires dans l'ordre inverse.

Ainsi, il désengage le pêne de verrouillage 12 du logement supérieur 14, tirer le panneau mobile 7 vers lui jusqu'à ce que le collerette supérieur 20 du cadre de support 15 entre en contact et écrase au maximum le lobe supérieur 24 du joint d'étanchéité 22, puis réengage le pêne de verrouillage 12 dans le logement inférieur 13 de la traverse arrière de pavillon 9.

Alternativement, le verrouillage et le déverrouillage du panneau mobile 7 peuvent être réalisés par des dispositifs électriques de commande à distance.

Un tel un pavillon de toit permet, tout en s'adaptant au style désiré, d'augmenter la hauteur de pavillon du véhicule lorsque cela est nécessaire, et ce, avec une transformation vers une configuration stable qui résiste aux écoulements aérodynamiques.

De plus un tel pavillon de toit est simplifié et comporte un nombre de pièces limité. Par conséquent, il peut être réalisé à un coût réduit.

Comparativement à l'état de la technique mentionné dans la partie introductive, le pavillon de toit de l'invention présente des moyens permettant d'en assurer l'étanchéité pour les deux positions abaissée et relevée du panneau mobile.

Il est à noter que le passage de la position abaissée à la position relevée de rehausse du panneau mobile est possible lorsque le véhicule est en mouvement car un tel pavillon de toit, même en position relevée de rehausse du panneau mobile, présente une faible préhension au vent.

## Revendications

1. Pavillon de toit (4) d'un véhicule automobile (1), comprenant un panneau avant fixe (6) et un panneau arrière mobile (7) entre une position abaissée, en prolongement du panneau fixe (6) et d'une traverse arrière de pavillon (9), et une position relevée de rehausse relativement à la traverse arrière de pavillon (9), **caractérisé en ce que** le panneau mobile (7) a sa partie avant (7AV) adjacente au panneau fixe (6) montée pivotante relativement à la caisse (10) du véhicule (1) autour d'un axe de rotation (11) transversal au véhicule (1) et sa partie arrière (7AR) munie d'un pêne de verrouillage (12) destiné à s'engager sélectivement dans l'un des logements inférieur et supérieur (13, 14) formant gâche de la traverse arrière de pavillon (9) de manière à verrouiller le panneau mobile (7) en position abaissée ou en position relevée de rehausse.

2. Pavillon de toit (4) selon la revendication 1, **caractérisé en ce que** le panneau mobile (7) est fixé sur un cadre de support (15) s'inscrivant en épaisseur dans le pavillon (4) et dont la partie avant (15AV) est reliée à la caisse (10) du véhicule (1) par une charnière transversale d'articulation (16) et dont la partie arrière (15AR) comprend le pêne de verrouillage (12) s'étendant sensiblement en direction longitudinale du véhicule (1).

3. Pavillon de toit (4) selon la revendication 2, **caractérisé en ce que** le cadre de support (15) du panneau mobile (7) comporte deux demi-cadres (17, 18) respectivement supérieur de support du panneau mobile (7) et inférieur dont la partie avant (18AV) est reliée à la caisse (10) du véhicule (1) par la charnière transversale d'articulation (16) et dont la partie arrière (18AR) comprend le pêne de verrouillage (12) s'étendant sensiblement en direction longitudinale du véhicule (1).

4. Pavillon de toit (4) selon la revendication 2 ou la revendication 3, **caractérisé en ce que** le cadre de support (15) comprend deux collerettes périphériques externes supérieure et inférieure (20, 21), respectivement destinées à venir sélectivement en appui sur deux joints d'étanchéité (22) solidaires du pavillon (4) respectivement en position abaissée et relevée du panneau mobile (7).

5. Pavillon de toit (4) selon la revendication 4, **caractérisé en ce que** les parties avant et arrière (22AV, 22AR) des joints d'étanchéités (22) sont solidaires respectivement d'une traverse de support (23) du panneau fixe (6) et de la traverse arrière de pavillon (9).

6. Pavillon de toit (4) selon la revendication 5, **caractérisé en ce que** les deux joints d'étanchéité (22) forment un joint unique constitué d'un lobe inférieur (25) et d'un lobe supérieur (24).

7. Pavillon de toit (4) selon l'une des revendications précédentes, **caractérisé en ce qu'**il comprend des canaux d'évacuation supérieur et inférieur (26, 27) traversant la traverse arrière de pavillon (9) et étant destinés à évacuer des eaux de pluie accumulées entre la traverse arrière de pavillon (9) et le cadre de support (15) du panneau mobile (7).

8. Pavillon de toit (4) selon l'une des revendications 4 à 7, **caractérisé en ce que** la charnière transversale d'articulation (16) comprend un bras coudé (30) pivotant autour de l'axe d'articulation (11) de cette charnière (16) et s'étendant vers l'arrière du véhicule (1) en ayant son extrémité externe (30AR) solidaire du bord avant (21AV) de la collerette inférieur (21) du cadre (15) de manière à également rehausser la partie avant (15AV) du cadre de support (15).

9. Pavillon de toit (4) selon l'une des revendications 2 à 8, **caractérisé en ce qu'**il comprend au moins un compensateur (31) monté entre la caisse (10) du véhicule (1) et le cadre de support (15) du pavillon mobile de façon que le panneau mobile (7) soit poussé automatiquement vers l'extérieur du véhicule (1) lorsque le pêne de verrouillage (12) est dégagé du logement inférieur 13 de la traverse arrière de pavillon (9).

10. Pavillon de toit (4) selon l'une des revendications précédentes, **caractérisé en ce que** le panneau mobile (7) est constitué d'une plaque de verre fixée par collage.

11. Pavillon de toit (4) selon la revendication 10, **caractérisé en ce que** le cadre de support (15) du panneau mobile (7) comprend un rideau d'occultation (34) monté sous le panneau mobile (7).

12. Pavillon de toit (4) selon l'une des revendications précédentes, **caractérisé en ce que** le pêne de verrouillage (12) est manoeuvré manuellement ou peut être commandé à distance.

13. Véhicule automobile (1) pourvu d'un pavillon de toit (4) selon l'une des caractéristiques précédentes.
